# EUROPÄISCHE PATENTSCHRIFT

(11) **EP 0 218 843 B1**
(45) Veröffentlichungstag und Bekanntmachung des Hinweises auf die Patenterteilung: **28.04.1993**
(21) Anmeldenummer: 86111236.5
(22) Anmeldetag: 14.08.1986
(51) Int. Cl.: H01Q 3/24, H01Q 9/18, H04B 7/08

(54) **Diversity-Antenne für mobile Funkgeräte**
Diversity antenna for mobile radio devices
Antenne-diversité pour appareils de radio mobiles

(30) Priorität: 16.10.1985 DE 3536826
(43) Veröffentlichungstag der Anmeldung: 22.04.1987
(73) Patentinhaber: ROBERT BOSCH GMBH, 70442 Stuttgart (DE)
(72) Erfinder: Ketterling, Hans-Peter, Dipl.-Ing., D-1000 Berlin 42 (DE)

(56) Entgegenhaltungen:
- DE-A- 1 964 601
- US-A- 3 879 735
- IEEE TRANSACTIONS ON CONSUMER ELECTRONICS, Band CE-27, Nr. 1, Februar 1981, Seiten 51-61, IEEE, New York, US; R.A. FINGER et al.: "FM receivers in automobiles: a case for diversity reception"
- WIRELESS ENGINEER, Band 25, Nr. 303, Dezember 1948, Seiten 390-395, Iliffe Technical Publications Ltd, London, GB; G. BARZILAI et al.: "Diversity reception in U.S.W. radio links"
- IEEE INTERNATIONAL CONFERENCE ON COMMUNICATIONS, Minneapolis, 17.-19. Juni 1974, Seiten 12C.1-12C.3, IEEE, New York, US; A. VIGANTS: "Threshold-switched los space-diversity reception in the everglades"
- IEEE TRANSACTIONS ON CONSUMER ELECTRONICS, Band CE-28, Nr. 3, August 1982, Seiten 437-445, IEEE, New York, US; I. YASHIMA et al.: "Development of the TV receiver for cars"

## Beschreibung

Die Erfindung geht von einer Diversity-Antenne nach der Gattung des Anspruchs 1 aus.

Durch den Einsatz von Diversity-Antennen können Empfangsstörungen, die auf den Fading-Effekt zurückgehen, erheblich reduziert werden, so daß beispielsweise nach einer Umschaltung von einem ersten Strahler auf einen zweiten Strahler eine Feldstärkeerhöhung von bis zu 20 dB möglich ist. Es ist bekannt (IEEE Transactions on Consumer Electronics, Vol. CE-27, Februar 1981, Nr. 1, Seiten 51-61), für den Diversity-Betrieb zwei Antennen in einem horizontalen Abstand auf einer Fahrzeugkarosserie einzeln zu montieren. Es ist weiterhin bekannt (Wireless Engineer, 25, Dezember 1948, Seiten 390 bis 395), zwei oder mehrere Parabolantennen vertikal übereinander anzuordnen und jeweils diejenige Antenne, die die größte Empfangsfeldstärke liefert, mittels einer feldstärkeabhängigen Umschaltvorrichtung auszuwählen. Der zuletzt genannte Aufbau für eine Diversity-Antenne erfordert einen hohen Platzbedarf, so daß er zum Beispiel für den Einsatz bei Personenkraftwagen nicht geeignet ist.

Der Erfindung liegt die Aufgabe zugrunde, eine Diversity-Antenne nach dem Oberbegriff des Anspruchs 1 derart weiterzubilden, daß die Strahler eine kompakte Einheit bilden, die nicht nur für Fahrzeugfunkgeräte, sondern gegebenenfalls auch für ein in der Hand zu haltendes Funkgerät geeignet ist.

Diese Aufgabe wird durch die Merkmale des Anspruchs 1 gelöst. Damit ist der Vorteil verbunden, daß die Diversity-Antenne erheblich einfacher zu montieren ist und daß sie gegenüber einer einzelnen Antenne keinen größeren Raum beansprucht. Der zuletzt genannte Vorteil führt zu einer Realisierbarkeit einer Diversity-Antenne für in der Hand zu haltende Funkgeräte. Besonders vorteilhaft ist eine erfindungsgemäße Diversity-Antenne, bei der die Strahler aus einem zentralen, elektrisch leitenden Stab und abwechselnd aufgebrachten Isolierstoffschichten und leitenden Schichten gebildet werden. Dadurch wird die Serienherstellung einer erfindungsgemäßen Diversity-Antenne erheblich vereinfacht.

Ausführungsbeispiele der Erfindung sind in der Zeichnung anhand zweier Figuren dargestellt und werden nachfolgend näher erläutert. Die Zeichnung zeigt in
- Fig. 1: eine Schnittansicht einer Diversity-Antenne mit zwei Strahlern und
- Fig. 2: eine unmaßstäbliche Schnittansicht einer Diversity-Antenne, die aus auf einem Stab aufgebrachten Isolierstoffschichten und leitenden Schichten besteht.

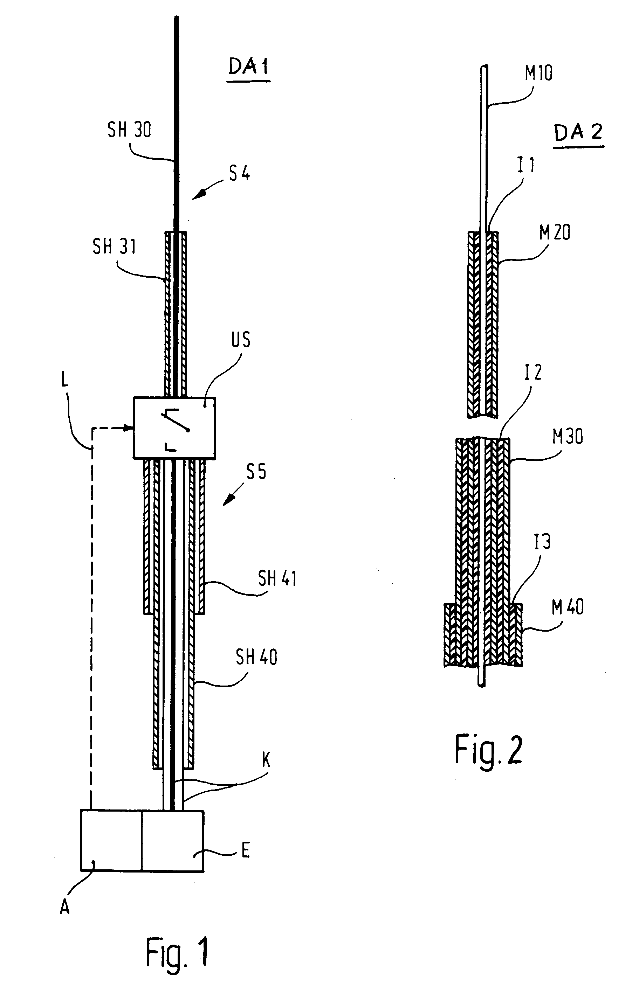

Die Fig. 1 zeigt eine erfindungsgemäße Diversity-Antenne DA1 aus mehreren koaxialen Bauteilen. Ein leitender Stab SH30 bildet hierbei zusammen mit einer leitenden Hülse SH31 einen ersten Strahler S4 und eine leitende Hülse SH40 mit einer darüber angeordneten größeren Hülse SH41 einen zweiten Strahler S5. Der Verbindungspunkt zwischen dem eine Strahlerhälfte bildenden Stab SH30 und der die andere Strahlerhälfte bildenden Hülse SH31 ist in eine Schaltvorrichtung US verlegt, ebenso der Verbindungspunkt zwischen den Strahlerhälften, die durch die Hülsen SH30, SH31, SH40, SH41 gebildet sind. Die Signalableitung erfolgt über ein mit der Schaltvorrichtung US verbundenes Koaxialkabel K, das innerhalb der Hülse SH40 verläuft und mit einem Hochfrequenzempfänger E verbunden ist. Zu dem Hochfrequenzempfänger gehört ein Auswerter A. Der Ausgang des Auswerters ist über eine Leitung L mit einem Steuereingang der Schaltvorrichtung US verbunden. Die in Fig. 1 gestrichelt eingezeichnete Leitung L ist vorzugsweise der Innenleiter des Koaxialkabels K.

Wenn vorstehend von Strahlerhälften die Rede war, dann ist zu bedenken, daß durch die kaoxiale Anordnung von Stab und Hülsen keine gleichlangen Strahlerelemente vorhanden sein können, weil sich die Strahlerelemente gegenseitig beeinflussen.

Die Wirkungsweise der vorstehend beschriebenen Diversity-Antenne ist folgende.

Befindet sich die Schaltvorrichtung US in der in Fig. 1 gezeigten Stellung, so ist nur der obere Strahler S4 über die Schaltvorrichtung US und das Koaxialkabel K mit dem Eingang des Hochfreqzenzempfängers E verbunden. Stellt der mit dem Hochfrequenzempfänger verbundene Auswerter A dann fest, daß die Empfangsfeldstärke zurückgeht, so gibt er an seinem Ausgang ein bestimmtes Steuersignal ab, das dafür sorgt, daß die Schaltvorrichtung US in ihre zweite Stellung gesteuert wird. In dieser Stellung ist nur der untere Strahler S5 mit dem Eingang des Hochfrequenzempfängers E verbunden. Auswerter A und Schaltvorrichtung US sind vorzugsweise elektronisch arbeitende Vorrichtungen, die im gegebenen Fall für eine kurzfristige Umschaltung sorgen. Die Schaltvorrichtung wird vorzugsweise durch eine Halbleiterschaltvorrichtung, zum Beispiel einen PIN-Diodenschalter, gebildet.

Fig. 2 zeigt eine Schnittansicht einer weiteren Diversity-Antenne DA2. Dabei wird eine Schichttechnik derart angewendet, daß auf einen elektrisch leitenden Stab M10 Isolierstoffschichten und leitende Schichten abwechselnd aufgebracht sind; vgl. I1, M20, I2, M30, I3, M40 usw. Die leitenden Schichten können durch eine Metallbedampfung der Isolierstoffschichten hergestellt sein. Eine derart aufgebaute Diversity-Antenne ist vorzugsweise von einer elastischen Isolierstoffschicht umgeben, die als mechanischer Schutz für die gesamte Antenne dient.

## Patentansprüche

1. Diversity-Antenne eines mobilen Funkgerätes mit zwei stabförmigen Strahlern, deren Längsachsen fluchten, deren auf die Länge bezogenen Symmetriepunkte einen Abstand voneinander aufweisen und die mit dem mobilen Funkgerät über einen Umschalter verbunden sind, der in Abhängigkeit von der Empfangsfeldstärke gesteuert wird, **dadurch gekennzeichnet,** daß beide Strahler (S4, S5) koaxial übereinander aufgebaut sind, wobei der erste Strahler (S4) aus einem zentralen, elektrisch leitenden Stab (SH30) und einer ihn mit Abstand koaxial umgebenden ersten elektrisch leitenden Hülse (SH31) und der zweite Strahler (S5) aus einer zweiten elektrisch leitenden Hülse (SH 40) und einer die zweite Hülse mit Abstand umgebenden dritten elektrisch leitenden Hülse (SH41) besteht.

2. Diversity-Antenne nach Anspruch 1, dadurch gekennzeichnet, daß die Strahler aus einem zentralen, elektrisch leitenden Stab (M10) und aus abwechselnd aufgebrachten Isolierstoffschichten (I1, I2, I3) und leitenden Schichten (M20, M30, M40) gebildet werden.

## Claims

1. Diversity antenna of a mobile radio set having two rod-shaped aerials whose longitudinal axes are aligned and whose points of symmetry referred to the length have a mutual separation and which are connected to the mobile radio set via a changeover switch which is controlled as a function of the intensity of received field, characterised in that two aerials (S4, S5) are constructed coaxially above one another, the first aerial (S4) consisting of a central, electrically conductive rod (SH30) and, surrounding the latter coaxially with a separation, a first electrically conductive sleeve (SH31), and the second aerial (S5) consisting of a second electrically conductive sleeve (SH 40) and a third electrically conductive sleeve (SH41) surrounding the second sleeve with a separation.

2. Diversity antenna according to Claim 1, characterised in that the aerials are formed from a central, electrically conductive rod (M10) and from layers (I1, I2, I3) of insulant and conductive layers (M20, M30, M40) applied in an alternating fashion.

## Revendications

1. Antenne-diversité d'un appareil mobile de radio comportant deux antennes à tiges alignées axialement présentant un certain espacement entre leurs points de symétrie longitudinaux respectifs et reliées à l'appareil radio mobile par un commutateur piloté en fonction de l'intensité du champ reçu, caractérisée en ce que les deux antennes (S4, S5), coaxiales, se superposent, la première (S4) étant constituée d'une tige centrale conductrice de l'électricité (SH30) entourée à une certaine distance par une douille coaxiale conductrice (SH31), tandis que la seconde antenne (S5) est constituée d'une deuxième douille conductrice (SH40) entourée elle même à une certaine distance par une troisième douille conductrice (SH41).

2. Antenne-diversité selon la revendication 1, caractérisée en ce que les antennes sont constituées par une tige centrale conductrice (M10) entourée en alternance de couches isolantes (I1, I2, I3) et de couches conductrices (M20, M30, M40).
